(19) Europäisches Patentamt
European Patent Office
Office européen des brevets

(11) Veröffentlichungsnummer: **0 060 330**
**B1**

# (12) EUROPÄISCHE PATENTSCHRIFT

(45) Veröffentlichungstag der Patentschrift: **13.02.85**

(51) Int. Cl.[4]: **G 02 F 1/133**

(21) Anmeldenummer: **81108938.2**

(22) Anmeldetag: **26.10.81**

(54) **Verfahren zur Herstellung von Orientierungsschichten für Flüssigkristalldisplays sowie Orientierungsschichten aufweisende Flüssigkristalldisplays.**

(30) Priorität: **27.02.81 DE 3107519**

(43) Veröffentlichungstag der Anmeldung: **22.09.82 Patentblatt 82/38**

(45) Bekanntmachung des Hinweises auf die Patenterteilung: **13.02.85 Patentblatt 85/7**

(84) Benannte Vertragsstaaten: **DE FR GB IT**

(56) Entgegenhaltungen:
**DE - A - 2 638 091**
**FR - A - 2 294 462**

(73) Patentinhaber: **Siemens Aktiengesellschaft, Berlin und München Wittelsbacherplatz 2, D-8000 München 2 (DE)**

(72) Erfinder: **Ahne, Hellmut, Dr., Heidestrasse 6, D-8551 Röttenbach (DE)**
Erfinder: **Krüger, Hans, Dipl.-Phys., Peralohstrasse 13, D-8000 München 83 (DE)**
Erfinder: **Rubner, Roland, Dr., Buchenring 15, D-8551 Röttenbach (DE)**

EP 0 060 330 B1

Anmerkung. Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Die Erfindung betrifft ein Verfahren zur Herstellung von Orientierungsschichten für Flüssigkristalldisplays durch Aufbringen einer Lösung eines organischen Präpolymeren auf ein transparentes Substrat und nachfolgende Temperung sowie Orientierungsbehandlung und Flüssigkristalldisplays mit einer nach diesem Verfahren hergestellten Orientierungsschicht.

Bei Flüssigkristalldisplays (LCD) ist eine gleichmäßige Ausrichtung der Flüssigkristalle erforderlich. Deshalb werden auf die Elektroden sogenannte Orientierungsschichten aufgebracht. Die Herstellung der Orientierungsschichten kann beispielsweise durch eine Schrägbedampfung mit $SiO_x$ erfolgen. Dies ist aber ein aufwendiges und damit auch relativ teures Verfahren. Es ist daher bereits versucht worden, Orientierungsschichten aus organischen Materialien einzusetzen.

Außerdem ist bei Flüssigkristalldisplays eine gute Abdichtung erforderlich, um die Betriebssicherheit zu gewährleisten. Anstelle einer Verklebung wird deshalb, insbesondere bei hochwertigen Displays, eine Versiegelung mit Glaslot vorgenommen, einem niedrigschmelzenden Glas. Die Orientierungsschichten in Glaslot-Flüssigkristalldisplays müssen daher Temperaturen bis 400°C und darüber widerstehen können, ohne daß ihre morphologische Struktur verändert wird.

Organische Orientierungsschichten für Flüssigkristallanzeigen oder -displays bestehen beispielsweise aus Polyvinylalkohol. Derartige Schichten weisen aber nur eine sehr begrenzte Wärmeformbeständigkeit und chemische Resistenz auf. Bei erhöhten thermischen Anforderungen wird deshalb Polyimid verwendet. Wegen seiner Eigenfärbung kann Polyimid aber nur in geringen Schichtdicken eingesetzt werden, darüber hinaus üben derartige Schichten – wegen der mangelnden Alkaliresistenz des Polyimids – keine Vergütungsfunktionen für das Glassubstrat aus. Es sind daher relativ teure Glassubstrate mit einer zusätzlichen $SiO_2$-Schicht erforderlich. Außerdem sind Polyimid-Orientierungsschichten für hochwertige, mit Glaslot verschmolzene Flüssigkristalldisplays wegen der zu niedrigen Wärmeformbeständigkeit wenig geeignet.

Die Orientierungsschichten aus Polyimid werden im übrigen in der Weise hergestellt, daß eine Polyamidocarbonsäure in einem Lösungsmittel gelöst und auf die Elektrodenschicht bzw. die Elektrodenbasisplatte aufgetragen wird. Nach dem Beschichten wird der Filmüberzug auf höhere Temperaturen erhitzt, d. h. getempert, wodurch aus der Polyamidocarbonsäure, d. h. dem Präpolymeren, das Polyimid gebildet wird. Daran schließt sich dann die Orientierungsbehandlung des Polyimidharzfilmes an (vgl. dazu DE-AS 2 638 091).

Aufgabe der Erfindung ist es, ein Verfahren der eingangs genannten Art in der Weise auszugestalten, daß die Herstellung von organischen Orientierungsschichten für Flüssigkristalldisplays ermöglicht wird, die auch bei Schichtdicken $\leq 0{,}1\ \mu m$ nur eine geringe Eigenfärbung besitzen, ausreichend transparent sowie resistent gegen alkalische Medien sind und auch bei Temperaturen $\geq 420°C$ keiner Veränderung der morphologischen Struktur unterliegen.

Dies wird erfindungsgemäß dadurch erreicht, daß Präpolymere von Polyoxazolen, Polythiazolen, Polyimidazolen, Polyoxazinonen oder Polyoxazindionen verwendet werden.

Präpolymere der genannten Art weisen eine hohe thermische Beständigkeit (bis zu 520°C) und Alkaliresistenz auf. Neben einer hohen Transparenz der Filme und einer geringen Eigenfärbung, die sich auch bei hohen thermischen Belastungen nur unwesentlich ändert, zeichnen sich die nach dem erfindungsgemäßen Verfahren hergestellten Orientierungsschichten durch eine hohe Wärmeformbeständigkeit aus, die überraschenderweise auch bei Temperaturen $\geq 420°C$ zu keiner Veränderung selbst feinster morphologischer Strukturen führt. Nach dem erfindungsgemäßen Verfahren können somit Orientierungsschichten in Form von sogenannten Reibeschichten hergestellt werden. Damit kann auch bei der Herstellung hochwertiger Glaslot-Flüssigkristalldisplays auf die kostenaufwendige Schrägbedampfung verzichtet und die kostengünstigere Reibetechnik eingesetzt werden. Die hohe Transparenz und die geringe Eigenfärbung der nach dem erfindungsgemäßen Verfahren hergestellten Orientierungsschichten erlaubt darüber hinaus höhere Schichtdicken, so daß diese Schichten – insbesondere auch wegen der Alkaliresistenz – eine zusätzliche Schutz- bzw. Vergütungsfunktion übernehmen können. Dies bedeutet aber, daß beim Einsatz derartiger Orientierungsschichten billigere Glassubstrate als Basismaterialien verwendet werden können, was zu einer erheblichen Kostenreduzierung bei der Herstellung der Flüssigkristalldisplays führt.

Die beim erfindungsgemäßen Verfahren eingesetzten Präpolymeren weisen im allgemeinen folgende Struktur auf:

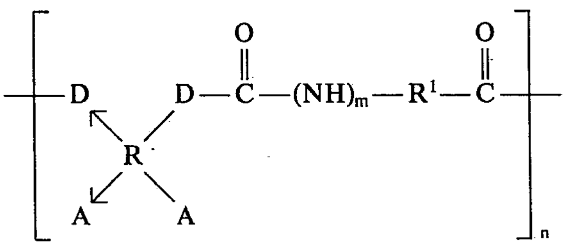

(1)

Dabei soll mit den in der Formel enthaltenen Pfeilen die Tatsache zum Ausdruck gebracht werden, daß die beiden fraglichen Substituenten an R ihre Stellung vertauschen können. Dies ist deshalb von Bedeutung, weil es sich bei R, wie nachfolgend noch erläutert wird, um einen cyclischen Rest handelt.

In der Formel (1) bedeutet n jeweils eine ganze Zahl von 2 bis etwa 100; m ist, wie nachfolgend noch ausgeführt wird, 0 oder 1.

Für die Reste R, $R^1$, A und D gilt folgendes:

R ist ein — gegebenenfalls halogenierter — zumindest partiell aromatischer und/oder heterocyclischer tetravalenter, d. h. tetrafunktioneller Rest, bei dem jeweils zwei Valenzen in Nachbarstellung zueinander angeordnet sind; weist der Rest R mehrere aromatische und/oder heterocyclische Strukturelemente auf, so befinden sich die Valenzpaare jeweils an endständigen derartigen Strukturelementen;

$R^1$ ist ein — gegebenenfalls halogenierter — divalenter, d. h. difunktioneller Rest aliphatischer und/oder cycloaliphatischer, gegebenenfalls Heteroatome aufweisender, und/oder aromatischer und/oder heterocyclischer Struktur;

A bedeutet $-COOR^2$, $-OR^2$, $-SR^2$ oder

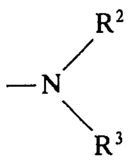

wobei $R^3$ Wasserstoff oder ein Alkyl- bzw. Alkylesteralkylrest ist, und

D bedeutet $-O-$ oder $-NH-$.

Dabei sind für A und D folgende Kombinationen erlaubt:

Bei D = $-NH-$ und m = 0 ist A = $-OR^2$ (Polyoxazol), $-SR^2$ (Polythiazol), $-NR^2R^3$ (Polyimidazol) oder $-COOR^2$ (Polyoxazinon);

bei D = $-O-$ und m = 1 ist A = $-COOR^2$ (Polyoxazindion).

In Klammern ist dabei jeweils die Klasse von Polymeren angegeben, die aus dem entsprechenden Präpolymeren gebildet wird. Insgesamt werden die zu den genannten Polymeren gehörenden Präpolymeren durch Formel (1) wiedergegeben.

Die Reste R und $R^1$ haben insbesondere folgende Bedeutung:

R = 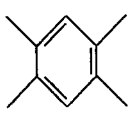 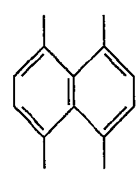 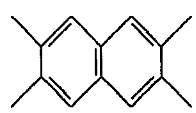

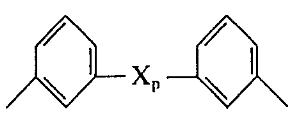 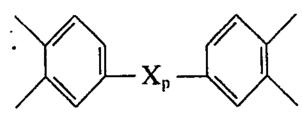

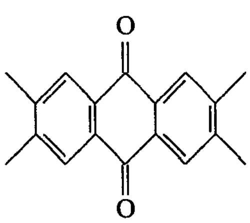

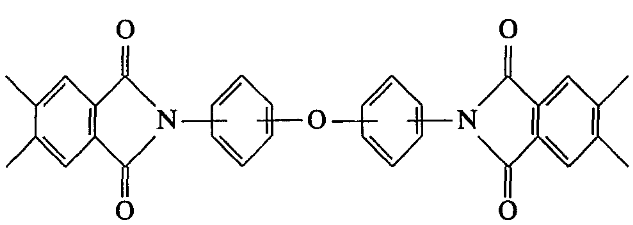

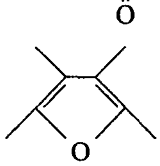 und 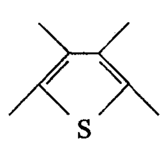

wobei p = 0 oder 1 ist und X für einen der folgenden Reste steht:

X = 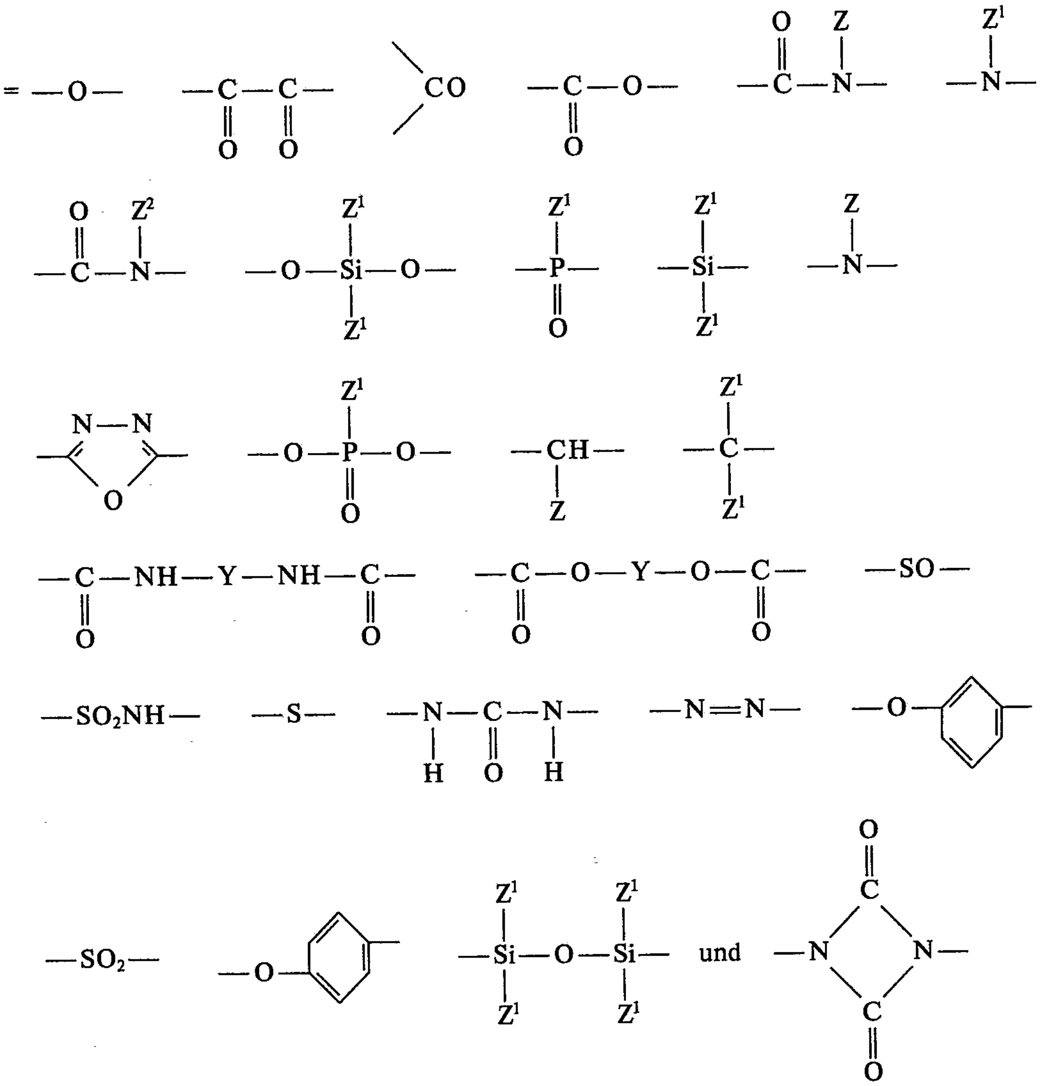 und

Für die weiteren Reste gilt:

Y = 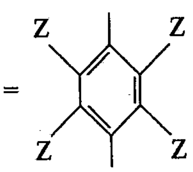 $—(CH_2)_o—$ mit o = 2 bis 10, und

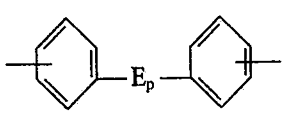 mit p = 0 oder 1;

Z = H oder Alkyl mit 1 bis 6 Kohlenstoffatomen;
$Z^1$ = Alkyl mit 1 bis 10 Kohlenstoffatomen oder Aryl;
$Z^2$ = Aryl oder Heteroaryl; und

E = 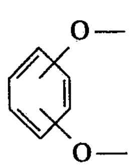 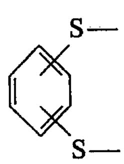 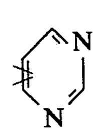 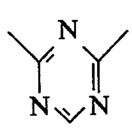 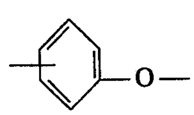

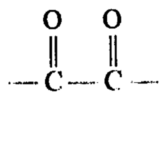 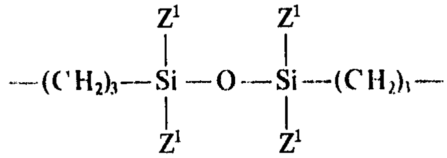 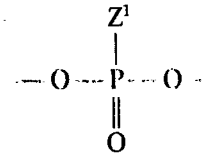

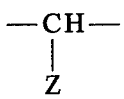 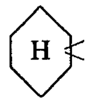 $—(CH_2)_q—$ $—(CF_2)_r—$ —SO— $—SO_2—$

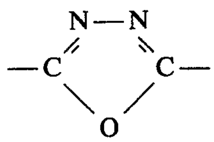 $—SO_2NH—$ 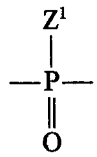 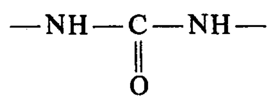

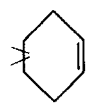 —N=N— 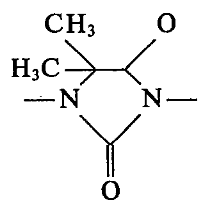 —S— —O— 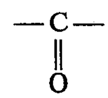

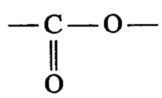 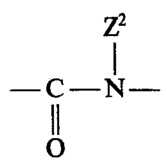 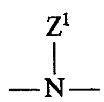 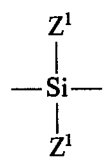 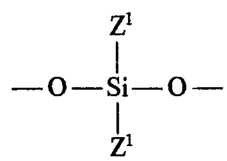 und

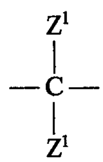

wobei q = 2 bis 14 und r = 2 bis 18, und Z, $Z^1$ und $Z^2$ wie vorstehend definiert sind.

$R^1$ = 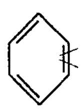 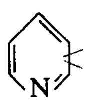 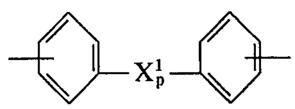 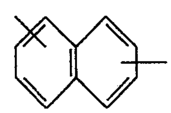

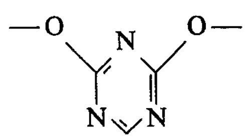 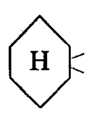 $—(CH_2)_q—$ $—(CF_2)_r—$ 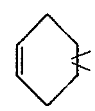

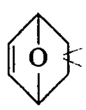 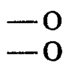 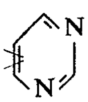 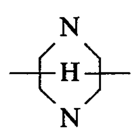 und 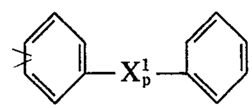

wobei p = 0 oder 1, q = 2 bis 14 und r = 2 bis 18; beim Rest $R^1$ können die Wasserstoffatome auch durch Cl oder Br substituiert sein.

Für $X^1$ gilt:

$X^1$ = —O— 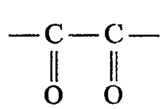 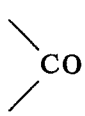 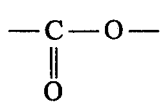 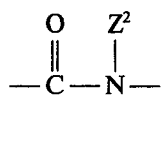 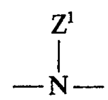

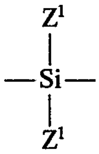 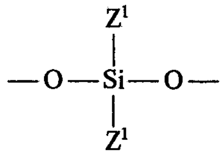 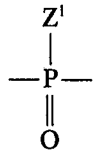 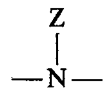 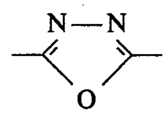

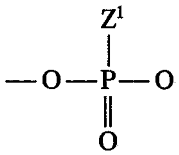 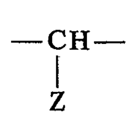 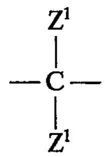 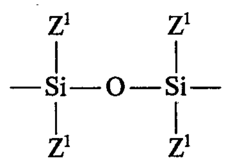

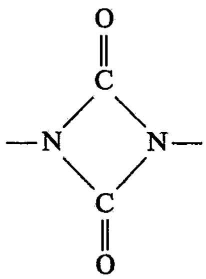 —SO— —$SO_2$— —$SO_2NH$— —S—

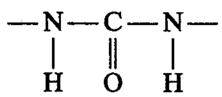 —N═N— 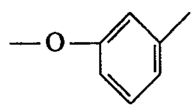 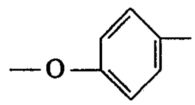

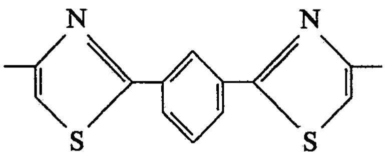 und 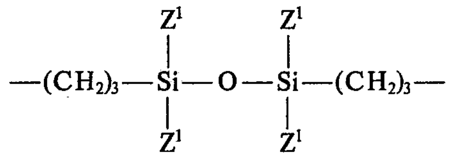

wobei Z, $Z^1$ und $Z^2$ wie vorstehend definiert sind.

Verbindungen der vorstehend genannten Art sind — an sich — beispielsweise in den deutschen Offenlegungsschriften 2 933 819, 2 933 826 und 2 933 828 beschrieben, und zwar Polyimidazol-, Polyoxazindion- und Polyoxazol-Präpolymere.

Bei den Polyoxazol-Präpolymeren handelt es sich hierbei um Additionsprodukte olefinisch ungesättigter Monoepoxide an hydroxylgruppenhaltige Polykondensationsprodukte von aromatischen und/oder heterocyclischen Dihydroxydiaminoverbindungen mit Dicarbonsäurechloriden oder -estern. Die Polyimidazol-Präpolymeren sind Additionsprodukte olefinisch ungesättigter Monoepoxide an aminogruppenhaltige Polykondensationsprodukte von aromatischen und/oder heterocyclischen Tetraaminoverbindungen mit Dicarbonsäurechloriden oder -estern und die Polyoxazindion-Präpolymeren Additionsprodukte olefinisch ungesättigter Monoepoxide an carboxylgruppenhaltige Polyadditionsprodukte aus aromatischen und/oder heterocyclischen Dihydroxydicarbonsäuren und Diisocyanaten.

Von Vorteil ist es, wenn beim erfindungsgemäßen Verfahren Präpolymere eingesetzt werden, die beim Tempern einen hohen Anteil an flüchtigen Produkten abgeben. Auf diese Weise kann nämlich eine Reduzierung der Schichtdicke erreicht werden, und zwar bis zu 40% und darüber, d. h. es können sehr dünne Schichten hergestellt werden. Obwohl sich auf diese Weise Schichtstärken $\leq 0{,}02\ \mu m$ ergeben, weisen derartige Schichten einen homogenen Charakter auf.

Zur Verminderung der Schichtdicke können ferner der Präpolymerenlösung Monomere, Oligomere und/oder Polymere zugesetzt werden, welche bei Temperaturen $\geq 250°C$, d. h. beim Temperprozeß, zumindest teilweise verflüchtigt werden. Geeignete Zusätze sind beispielsweise Diazochinone (o-Chinon- und o-Naphthochinondiazide), ferner oligomere Ester und Ether mit aliphatischen oder cycloaliphatischen Strukturelementen sowie polymere Verbindungen, wie Polymethylmethacrylat und Polyolefinsulfone.

Flüssigkristalldisplays nach der Erfindung sind dadurch gekennzeichnet, daß sie Orientierungsschichten aus Polyoxazol, Polythiazol, Polyimidazol, Polyoxazinon oder Polyoxazindion aufweisen. Die Orientierungsschichten sind dabei jeweils aus entsprechenden Polymervorstufen, sogenannten Präpolymeren, hergestellt. Die Polymerschichten, die in einer bestimmten Richtung orientiert sind, befinden sich auf den Elektroden bzw. Elektrodenschichten und können zum Teil auch die Elektrodenbasisplatten (Trägerplatten) bedecken.

Anhand von Ausführungsbeispielen und einer Figur, in der eine Ausführungsform eines erfindungsgemäßen Flüssigkristalldisplays dargestellt ist, soll die Erfindung noch näher erläutert werden.

Beispiel 1

Orientierungsschichten aus Polybenzoxazol

Zur Darstellung eines Polybenzoxazol-Präpolymeren werden zu einer Lösung von 6,5 Gewichtsteilen 3.3'-Dihydroxybenzidin in 50 Volumenteilen Dimethylacetamid und 9 Volumenteilen Pyridin unter intensivem Rühren bei einer Temperatur von −5 bis −20°C innerhalb von etwa 30 min 6,1 Gewichtsteile Isophthalsäuredichlorid in 20 Volumenteilen Cyclohexanon getropft. Nach 3stündigem weiteren Rühren bei Raumtemperatur wird die viskose Reaktionslösung über Nacht stehengelassen, dann wird die Lösung unter Rühren zu 1000 Volumenteilen Wasser getropft. Das sich dabei abscheidende Harz wird abgetrennt, mit Wasser und Methanol gewaschen und im Vakuum bei ca. 60°C getrocknet.

Mit einer 10%igen Lösung des Präpolymeren in N-Methylpyrrolidon, welche – als Haftvermittler – 1% eines Vinylalkoxysilans, wie Vinyl-tris(β-methoxyethoxy)-silan, enthält, bezogen auf das Festharz, werden die mit den Elektroden versehenen Trägerplatten nach dem sogenannten Roller-Coating-Verfahren beschichtet; die Randzonen, auf die später der Kleberahmen bzw. die Glaslotversiegelung aufgebracht wird, können dabei durch strukturierte Walzen oder Schablonen freigehalten werden. Die Präpolymeren-Lösung kann beispielsweise aber auch durch Aufpinseln, Tauchen oder Besprühen auf die Elektroden aufgebracht werden. Nach dem Beschichten wird der Filmüberzug bei ca. 100°C getrocknet und anschließend, jeweils 1/2 Stunde lang, bei ca. 270°C und ca. 400°C getempert, wobei homogene Schichten mit einer Schichtstärke von 0,04 µm erhalten werden. Durch Reiben mit einer Bürste werden dann in der Oberfläche der Polybenzoxazol-Schicht die für die Orientierung der Flüssigkristalle erforderlichen Rillen erzeugt. Die Orientierungsbehandlung kann beispielsweise aber auch mit einem Stoff erfolgen, wobei das Reiben aber immer in einer konstanten Richtung vorgenommen wird.

Die in der vorstehend beschriebenen Weise hergestellten Orientierungsschichten bewirken eine gute Orientierung, d. h. gleichmäßige Ausrichtung, der Flüssigkristalle in nach der Klebetechnik hergestellten Displays. Die guten Orientierungseigenschaften bleiben aber auch bei nach der Glaslottechnik gefertigten Displays erhalten, wobei jeweils zwei Trägerplatten bei Temperaturen von etwa 460°C am Rand mittels Glaslot miteinander verbunden werden. Im Gegensatz dazu, so haben Vergleichsversuche ergeben, gehen bei Polyimid-Orientierungsschichten die Orientierungseigenschaften nach einer Erwärmung auf 460°C verloren.

Im übrigen sind die in den erfindungsgemäßen Flüssigkristalldisplays vorhandenen Orientierungsschichten nicht nur bei einer Schichtdicke von 0,04 µm transparent und von geringer Eigenfärbung, sondern es zeigen auch beispielsweise 0,14 µm starke Schichten keine Verfärbung.

Beispiel 2

Orientierungsschichten aus Polybenzoxazindion

Zur Herstellung eines Polybenzoxazindion-Präpolymeren werden zu einer Lösung von 28,8 Gewichtsteilen Methylendisalicylsäure (0,1 Mol) und 0,1 Gewichtsteilen 1.4-Diazabicyclo[2.2.2]octan als Katalysator in 100 Volumenteilen N-Methylpyrrolidon bei Raumtemperatur unter Rühren 25 Gewichtsteile p.p'-Diphenylmethandiisocyanat (0,1 Mol), gelöst in 50 Volumenteilen N-Vinylpyrrolidon, langsam zugetropft. Nach einer Reaktionszeit von 20 Stunden bei Raumtemperatur werden zu dieser Lösung unter Rühren 75 Volumenteile Glycidylacrylat und 0,1 Gewichtsteile Hydrochinon gegeben. Nach einer weiteren Reaktionszeit von 20 Stunden bei einer Temperatur von 50 bis 60°C und 48 Stunden bei Raumtemperatur wird das Harz mit 2000 Volumenteilen Toluol ausgefällt und im Vakuum getrocknet.

Die mit den Elektroden versehenen Trägerplatten werden im Roller-Coating-Verfahren mit einer 12%igen Lösung des Präpolymeren in Dimethylacetamid, welche – als Haftvermittler – 1% Vinyltriethoxysilan enthält, bezogen auf das Festharz, beschichtet. Der dabei erhaltene Filmüberzug wird unter Stickstoff 1 Stunde bei ca. 80°C getrocknet und anschließend 1 Stunde bei ca. 200°C und 1/2 Stunde bei ca. 400°C getempert. Nachfolgend werden die Oberflächen der Polybenzoxazindion-Schichten durch Reiben mit einer Bürste in einer bestimmten Richtung orientiert und dann werden die beschichteten Trägerplatten bei einer Temperatur von ca. 440°C mittels Glaslot miteinander verbunden. Auch nach dieser thermischen Behandlung werden die Flüssigkristalle der Displays gut orientiert.

Beispiel 3

Zur Herstellung sehr dünner Orientierungsschichten kann in der Weise vorgegangen werden, daß zur Beschichtung der Trägerplatten eine Lösung verwendet wird, die neben dem Präpolymeren ein Diazochinon enthält.

Versuche haben beispielsweise folgendes ergeben: Bringt man eine Lösung von 10 g des nach Beispiel 1 hergestellten Polybenzoxazol-Präpolymeren und von 10 g des Bis-naphthochinon-(1.2)-diazid-(2)-5-sulfonsäureesters von $\beta,\beta$-Bis(4-hydroxyphenyl)-propan in 180 ml N-Methylpyrrolidon mittels der Schleudertechnik (4000 U/min) auf ein Glassubstrat auf, so erhält man nach 2stündigem Trocknen bei 55°C im Umluftofen (mit 25% Frischluftzufuhr) eine Schicht mit einer Dicke von 0,08 $\mu$m. Nach 1stündigem Tempern bei ca. 400°C entsteht daraus dann eine homogene Schicht mit einer Dicke von 0,03 $\mu$m.

In der Figur ist — in einem schematischen Seitenschnitt — eine Ausführungsform eines erfindungsgemäßen Displays 10 dargestellt, und zwar eine 7-Segment-Flüssigkristallanzeige. Das Display 10 weist eine vordere Trägerplatte 11 und eine hintere Trägerplatte 12 auf. Die beiden Trägerplatten sind in ihren Randzonen mittels Glaslot hermetisch dicht miteinander verbunden, wobei gleichzeitig eine Art Rahmen 13 gebildet wird. Im Raum zwischen den durch den Rahmen 13 getrennten Trägerplatten 11 und 12 befinden sich die Flüssigkristalle 14. Auf den einander zugewandten Oberflächen der beiden Trägerplatten sind Elektroden bzw. Elektrodenschichten 15 und 16 in Form elektrisch leitender Beläge angebracht. Die Vorderelektroden 15 sowie die freie Oberfläche der Trägerplatte 11 sind von einer Orientierungsschicht 17 überzogen, auf der Rückelektrode 16 befindet sich eine Orientierungsschicht 18. Die Orientierungsschichten 17 und 18 bestehen beispielsweise aus Polybenzoxazol.

Auf den einander abgewandten Seiten sind die Trägerplatten 11 und 12 mit je einem Linearpolarisator 19 bzw. 20 versehen, wobei der hintere Polarisator zum vorderen gekreuzt angeordnet ist. Am hinteren Linearpolarisator 20 ist schließlich noch ein Reflektor 21 angeordnet. Das Flüssigkristalldisplay 10 arbeitet nach dem Prinzip der sogenannten Drehzelle, die beispielsweise in der DE-AS 2 158 563 im einzelnen beschrieben ist.

## Patentansprüche

1. Verfahren zur Herstellung von Orientierungsschichten für Flüssigkristalldisplays durch Aufbringen einer Lösung eines organischen Präpolymeren auf ein transparentes Substrat und nachfolgende Temperung sowie Orientierungsbehandlung, dadurch gekennzeichnet, daß Präpolymere von Polyoxazolen, Polythiazolen, Polyimidazolen, Polyoxazinonen oder Polyoxazindionen verwendet werden.

2. Verfahren nach Anspruch 1, dadurch gekennzeichnet, daß Präpolymere verwendet werden, die beim Tempern einen hohen Anteil an flüchtigen Produkten abgeben.

3. Verfahren nach Anspruch 1 oder 2, dadurch gekennzeichnet, daß der Präpolymerenlösung Monomere, Oligomere und/oder Polymere zugesetzt werden, welche bei Temperaturen ≥ 250°C zumindest teilweise verflüchtigt werden.

4. Verfahren nach einem der Ansprüche 1 bis 3, dadurch gekennzeichnet, daß der Präpolymerenlösung ein Silan zugesetzt wird.

5. Flüssigkristalldisplay, gekennzeichnet durch eine nach dem Verfahren nach einem der Ansprüche 1 bis 4 hergestellte Orientierungsschicht aus Polyoxazol, Polythiazol, Polyimidazol, Polyoxazinon oder Polyoxazindion.

## Claims

1. A process for the production of orientation layers for liquid-crystal displays by applying a solution of an organic prepolymer to a transparent substrate and subsequent heat and orientation treatment, characterised in that prepolymers of polyoxazoles, polythiazoles, polyimidazoles, polyoxazinones, or polyoxazindiones, are used.

2. A process as claimed in Claim 1, characterised in that prepolymers are used which during heat treatment emit a large amount of volatile products.

3. A process as claimed in Claim 1 or 2, characterised in that monomers, oligomers and/or polymers, which are at least partially volatilized at temperatures ≥ 250°C are added to the prepolymer solution.

4. A process as claimed in one of Claims 1 to 3, characterised in that a silane is added to the prepolymer solution.

5. A liquid crystal display, characterised by an orientation layer which is produced in accordance with the process as claimed in one of Claims 1 to 4 and which consists of polyoxazole, polythiazole, polyimidazole, polyoxazinone or polyoxazindione.

## Revendications

1. Procédé de préparation de couches d'orientation, pour des affichages à cristaux liquides par dépôt d'une solution d'un prépolymère organique sur un substrat transparent et par un recuit, ainsi que par un traitement d'orientation venant ensuite, caractérisé en ce qu'il consiste à utiliser des prépolymères de polyoxazole, de polythiazole, de polyimidazole, de polyoxazinone, ou de polyoxazindione.

2. Procédé suivant la revendication 1, caractérisé en ce qu'il consiste à utiliser des prépolymères qui,

au recuit, dégagent une proportion élevée de produits volatils.

3. Procédé suivant la revendication 1 ou 2, caractérisé en ce qu'il consiste à ajouter, à la solution de prépolymères, des monomères, des oligomères et/ou des polymères qui se volatilisent, au moins partiellement, à des températures $\geq 250°C$.

4. Procédé suivant l'une des revendications 1 à 3, caractérisé en ce qu'il consiste à ajouter un silane à la solution de prépolymères.

5. Affichage à cristaux liquides, caractérisé par une couche d'orientation préparée par le procédé suivant l'une des revendications 1 à 4, en polyoxazole, en polythiazole, en polyimidazole, en polyoxazinone ou en polyoxazinedione.

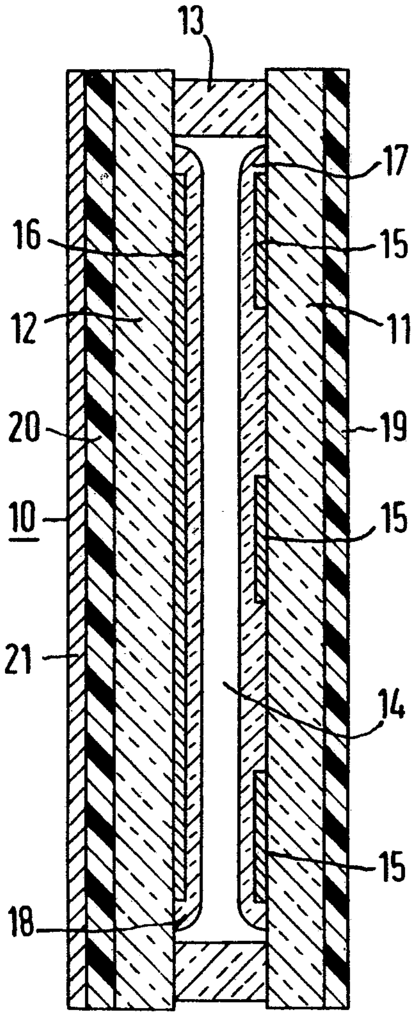
13
17
16
15
12
11
20
19
10
15
21
14
15
18